# EUROPEAN PATENT SPECIFICATION

(11) **EP 3 015 286 B1**
(45) Date of publication and mention of the grant of the patent: **03.04.2019**
(21) Application number: 15184573.2
(22) Date of filing: 10.09.2015
(51) Int. Cl.: B60C 11/03, B60C 11/12

(54) **PNEUMATIC TIRE**
LUFTREIFEN
PNEUMATIQUE

(30) Priority: 30.10.2014 JP 2014221802
(43) Date of publication of application: 04.05.2016
(73) Proprietor: SUMITOMO RUBBER INDUSTRIES LIMITED, Kobe-shi, Hyogo-ken (JP)
(72) Inventor: NAGASE, Masahiro, Kobe-shi, Hyogo 651-0072 (JP)
(74) Representative: Manitz Finsterwald Patent- und Rechtsanwaltspartnerschaft mbB

(56) References cited:
- EP-A1- 1 498 288
- EP-A2- 2 610 082

## Description

### Technical Field

The present invention relates to a pneumatic tire improved in the steering stability on dry road surface and wet performance in a well balanced manner. The features of the preamble of the independent claim are known from EP 2 610 082 A2. Related technology is known from EP 1 498 288 A1.

### Background Art

For example, the following patent document 1 discloses a pneumatic tire, wherein an outboard shoulder main groove intended to be positioned away from the center of the vehicle body is wider than an inboard shoulder main groove intended to be positioned towards the center of the vehicle body.

In such pneumatic tire, it is expected that the outboard shoulder main groove exhibits good drainage, and the inboard shoulder main groove exhibits less drainage.

Meanwhile, a pneumatic tire is usually installed on a wheel with a negative camber angle, therefore, the ground contacting patch of the tire has a tendency that the dimension measured in the tire circumferential direction becomes larger toward the inside of the vehicle.

Accordingly, in the pneumatic tire disclosed in the patent document 1, there is a problem such that an aquaplaning phenomenon is liable to occur from the vicinity of the inboard shoulder main groove in the ground contacting patch.

### [Prior art document]

### [Patent document]

[Patent document 1] Japanese Patent Application Publication No. 2013-78984

### Summary of the Invention

### Problems to be resolved by the Invention

The present invention was made with the view toward the above-mentioned actual circumstances, and a primary object is to provide a pneumatic tire, in which the steering stability on dry road surface and the wet performance can be improved in a well balanced manner.

### Means of solving the Problems

The present invention is a pneumatic tire comprises
a tread portion having an inboard tread edge to be positioned towards the center of a vehicle body, and an outboard tread edge to be positioned away from the center of the vehicle body,
the tread portion provided with
an inboard shoulder main groove disposed on the inboard tread edge side and extending continuously in the tire circumferential direction,
an outboard shoulder main groove disposed on the outboard tread edge side and extending continuously in the tire circumferential direction, and
a center main groove disposed between the inboard shoulder main groove and the outboard shoulder main groove and extending continuously in the tire circumferential direction, so as to define
an inboard shoulder land region axially outside the inboard shoulder main groove, and
an inboard middle land region between the inboard shoulder main groove and the center main groove,
a groove width W1 of the inboard shoulder main groove is more than a groove width W2 of the outboard shoulder main groove and in a range of from 9.0 % to 10.0 % of the tread width,
a ratio w4/w3 of a width W4 in the tire axial direction of the inboard shoulder land region to a width w3 in the tire axial direction of the inboard middle land region is in a range of from 1.3 to 1.4,
the inboard shoulder land region is provided with a plurality of shoulder lateral grooves extending axially inwardly from the inboard tread edge to terminate within the inboard shoulder land region, and arranged circumferentially of the tire, and
a ratio W5/P1 of a groove width W5 of the shoulder lateral grooves to an arrangement pitch P1 in the tire circumferential direction of the shoulder lateral grooves is in a range of from 0.18 to 0.25.

In the pneumatic tire according to the present invention, it is preferable that the inboard shoulder land region is provided with shoulder narrow grooves each comprising an inboard narrow groove part extending axially outwardly from the inboard shoulder main groove and having a groove width of not less than 2 mm in the tread of the inboard shoulder land region, and
a sipe-like part having a groove width of less than 2 mm in the tread of the inboard shoulder land region.

In the pneumatic tire according to the present invention, it is preferable that the inboard narrow groove part extends to a position axially outside the axially inner end of the shoulder lateral groove.

In the pneumatic tire according to the present invention, it is preferable that the sipe-like part comprises a first part extending from the inboard narrow groove part while inclining with respect to the tire axial direction, and a second part extending from the first part to the inboard tread edge in parallel with the tire axial direction.

In the pneumatic tire according to the present invention, it is preferable that the inboard middle land region is provided with middle narrow grooves extending from the inboard shoulder main groove to the center main groove, and
the axially outer end part of each middle narrow groove is overlapped in the tire circumferential direction with the circumferential extent of one of the inboard narrow groove parts.

In the pneumatic tire according to the present invention, it is preferable that the inboard middle land region is provided with middle narrow grooves extending from the inboard shoulder main groove to the center main groove,
the middle narrow groove comprises a sipe-like part having a groove width of less than 2 mm in the tread of the inboard middle land region, and
the sipe-like part of the middle narrow groove is inclined with respect to the tire axial direction to the opposite direction to the first part.

### Effects of the Invention

The pneumatic tire according to the present invention is a pneumatic tire comprising the tread portion having the inboard tread edge to be positioned towards the center of a vehicle body, and the outboard tread edge to be positioned away from the center of the vehicle body. The tread portion is provided with the inboard shoulder main groove disposed on the inboard tread edge side and extending continuously in the tire circumferential direction, the outboard shoulder main groove disposed on the outboard tread edge side and extending continuously in the tire circumferential direction, and the center main groove disposed between the inboard shoulder main groove and the outboard shoulder main groove and extending continuously in the tire circumferential direction, so as to define the inboard shoulder land region axially outside the inboard shoulder main groove, and the inboard middle land region between the inboard shoulder main groove and the center main groove.

The groove width W1 of the inboard shoulder main groove is more than the groove width W2 of the outboard shoulder main groove and in a range of from 9.0 % to 10.0 % of the tread width. Thereby, the inboard shoulder main groove exerts good drainage, and the occurrence of aquaplaning phenomenon can be effectively suppressed.

In general, when the groove width W1 of the inboard shoulder main groove is more than the groove width W2 of the outboard shoulder main groove, if the difference between the width of the inboard shoulder land region and the width of the inboard middle land region is large, then the narrow width land region is liable to deform excessively, and the steering stability on dry road surface has a tendency to deteriorate. According to the present invention, since the ratio W4/W3 of the width W4 in the tire axial direction of the inboard shoulder land region to the width W3 in the tire axial direction of the inboard middle land region is set in the range of from 1.3 to 1.4, it is possible to distribute the ground pressure evenly between the inboard shoulder land region and the inboard middle land region. Owing to the ground pressure evenly applied to the inboard middle land region and the inboard shoulder land region, and in cooperation with the above-mentioned structures of the inboard shoulder main groove, the steering stability on dry road surface and the wet performance can be improved in a well balanced manner.

If the width W1 of the inboard shoulder main groove is more than the groove width W2 of the outboard shoulder main groove, the rigidity of the inboard shoulder land region has a tendency to decrease.
According to the present invention, the inboard shoulder land region is provided with the shoulder lateral grooves arranged at intervals in the tire circumferential direction, and the shoulder lateral grooves extend axially inwardly from the inboard tread edge and are terminated within the inboard shoulder land region. Thereby, the decrease in the rigidity of the inboard shoulder land region resulting from the increase in the width of the inboard shoulder main groove is suppressed, and good steering stability on dry road surface can be obtained.

The ratio W5/P1 of the groove width w5 of the shoulder lateral groove to the circumferential arrangement pitch P1 of the shoulder lateral grooves is in the range of from 0.18 to 0.25. Thereby, when the inboard shoulder main groove, the inboard middle land region and the inboard shoulder land region constructed as above are given, the rigidity of the inboard shoulder land region and the drainage of the shoulder lateral groove are optimized.

As described above, in the pneumatic tire according to the present invention, the inboard land regions and the grooves therein, which are subjected to a relatively higher ground pressure due to the negative camber, are specifically defined. Thereby, in the pneumatic tire according to the present invention, the drainage of the inboard shoulder main groove and the shoulder lateral groove and the rigidity of the inboard middle land region and the inboard shoulder land region are optimized in a comprehensive manner.
Accordingly, the steering stability on dry road surface and the wet performance can be improved in a well balanced manner.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list.
For example, the standard wheel rim is the "standard rim" specified in JATMA, the "Measuring Rim" in ETRTO, the "Design Rim" in TRA or the like. The standard pressure is the "maximum air pressure" in JATMA, the "inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

The tread edges Te (Te1, Te2) are the axial outermost edges of the ground contacting patch which occurs under the normally inflated loaded condition when the camber angle of the tire is zero.

The tread width TW is the width measured under the normally inflated unloaded condition, as the axial distance between the tread edges Te (Te1, Te2) determined as above.

### Brief Description of the Drawings

Fig. 1 is a developed partial view of a tread portion of a pneumatic tire as an embodiment of the present invention.
Fig. 2 is a schematic cross sectional view of the tread portion taken along line A-A of Fig. 1.
Fig. 3 is a closeup of the inboard shoulder land region shown in Fig. 1.
Fig. 4 is a closeup of the shoulder narrow groove shown in Fig. 3.
Fig. 5(a) is a cross sectional view of the sipe-like part taken along line B-B of Fig. 4.
Fig. 5(b) is a cross sectional view of the narrow groove part taken along line C-C of Fig. 4.
Fig. 6 is a closeup of the outboard shoulder land region shown in Fig. 1.
Fig. 7 is a closeup of the inboard middle land region and the outboard middle land region show in Fig. 1.
Fig. 8 is a developed partial view of a tread portion of a pneumatic tire as the undermentioned comparative example 1.

### Mode for carrying out the Invention

Embodiments of the present invention will now be described in detail in conjunction with the accompanying drawings.

The present invention is suitably applied to a pneumatic tire for passenger cars.

As well known in the art, a pneumatic tire comprises a tread portion 2, a pair of axially spaced bead portions each with a bead core therein, a pair of sidewall portions extending between the tread edges and the bead portions, a carcass extending between the bead portions through the tread portion and the sidewall portions, and a tread reinforcing cord layer disposed radially outside the carcass in the tread portion.

The tread portion 2 is provided with a tread pattern of which orientation or position relative to the vehicle is specified. Accordingly, it is specified which side of the tire is inside and which side of the tire is outside.
For example, the sidewall portion to be located on outside when installed on the vehicle is provided with an indication such as "outside", and the sidewall portion to be located on inside is provided with an indication such as "inside".
The tread portion 2 has tread edges Te which are an inboard tread edge Te1 to be positioned towards the center of a vehicle body, and an outboard tread edge Te2 to be positioned away from the center of the vehicle body.

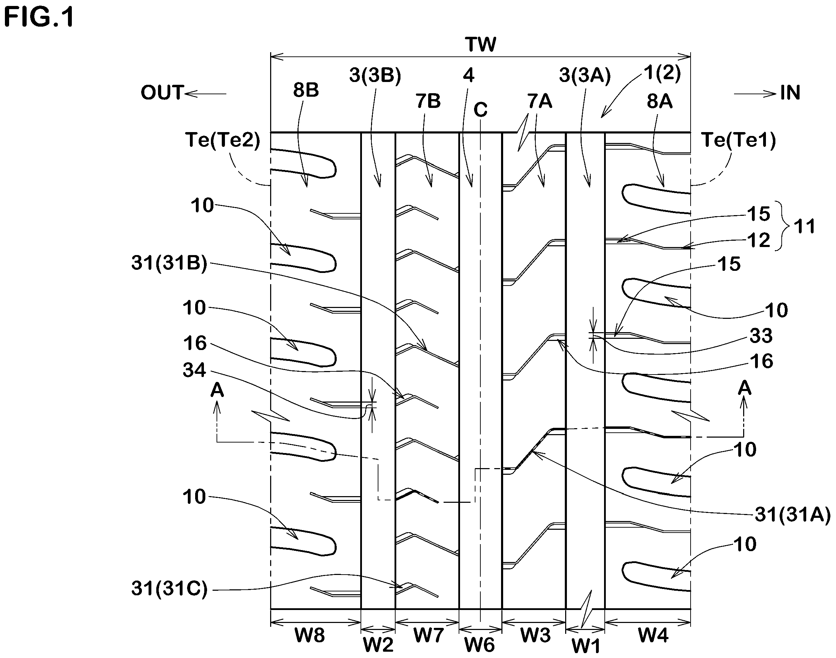

Fig. 1 is a developed partial view of a tread portion 2 of a pneumatic tire as an embodiment of the present invention. In this embodiment, the pneumatic tire 1 is designed for passenger cars.

The tread portion 2 is provided with circumferentially continuously extending main grooves 3 and 4 including two axially outermost shoulder main grooves 3, and at least one center main groove 4 therebetween.

In this embodiment, each of the shoulder main grooves 3 and the center main groove 4 is a straight groove. But, each of the shoulder main grooves 3 and the center main groove 4 may be a zigzag groove or a wavy groove.

The shoulder main grooves 3 are an inboard shoulder main groove 3A on the inboard tread edge Te1 side, and an outboard shoulder main groove 3B on the outboard tread edge Te2 side.

The groove width W1 of the inboard shoulder main groove 3A is more than the groove width W2 of the outboard shoulder main groove 3B, and in a range of from 9.0 % to 10.0 % of the tread width TW.
Thereby, the inboard shoulder main groove 3A exerts good drainage, and the occurrence of aquaplaning phenomenon can be effectively suppressed.

The groove width W2 of the outboard shoulder main groove 3B is preferably not more than 0.95 times, more preferably not more than 0.90 times, but preferably not less than 0.75 times, more preferably not less than 0.80 times the groove width W1 of the inboard shoulder main groove 3A.
Such outboard shoulder main groove 3B exerts good drainage, while maintaining the rigidity of the tread portion 2 in an outboard tread edge side.

In this embodiment, the above-mentioned at least one center main groove 4 is a single center main groove 4 disposed on the tire equator C.
As another example of the arrangement, it may be possible to dispose one center main groove 4 on each side of the tire equator C, for example.

The center main groove 4 has a groove width W6 of more than those of the inboard shoulder main groove 3A and the outboard shoulder main groove 3B.
Thereby, during running in wet conditions, the drainage of water existing in the vicinity of the tire equator C is expedited, and the occurrence of aquaplaning phenomenon can be effectively suppressed.

The groove width W6 of the center main groove 4 is set in a range of from 9.0 % to 11.0 % of the tread width TW in this example.
During running in wet conditions, such center main groove 4 can effectively discharge the water existing in the vicinity of the tire equator C toward the outside of the ground contacting patch.

The sum W1+W2+W6 of the groove width W1 of the inboard shoulder main groove 3A, the groove width W2 of the outboard shoulder main groove 3B and the groove width W6 of the center main groove 4 is preferably not less than 0.26 times, more preferably not less than 0.27 times, but preferably not more than 0.29 times, more preferably not more than 0.28 times the tread width TW.
Thereby, the steering stability on dry road surface and the wet performance can be improved in a well balanced manner.

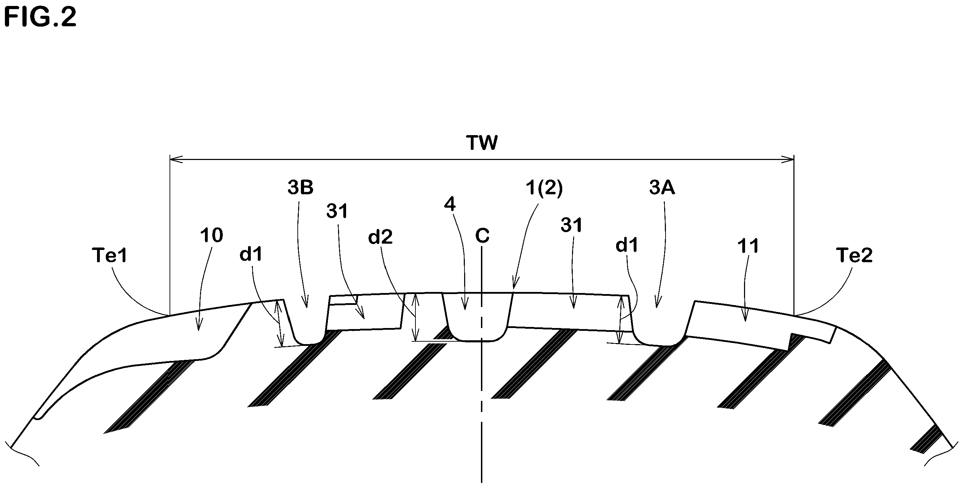

In Fig. 2, there is shown a schematic cross sectional view of the tread portion 2 taken along line A-A of Fig. 1. As shown in Fig. 2, the groove depth d1 of each shoulder main groove 3A, 3B and the groove depth d2 of the center main groove 4 are preferably set in a range of from 5.0 to 12.0 mm in the case of a passenger car tire.

By the above-mentioned main grooves 3 and 4, as shown in Fig. 1, the tread portion 2 is divided into an inboard shoulder land region 8A, an outboard shoulder land region 8B, an inboard middle land region 7A, and an outboard middle land region 7B. The inboard shoulder land region 8A is formed axially outside the inboard shoulder main groove 3A.
The outboard shoulder land region 8B is formed axially outside the outboard shoulder main groove 3B.
The inboard middle land region 7A is formed between the inboard shoulder main groove 3A and the center main groove 4. The outboard middle land region 7B is formed between the outboard shoulder main groove 3B and the center main groove 4.

The width w3 in the tire axial direction of the inboard middle land region 7A is set in a range of from 0.1 to 0.15 times the tread width TW. The width w7 in the tire axial direction of the outboard middle land region 7B is set in a range of from 0.1 to 0.15 times the tread width TW. Preferably, the width W3 of the inboard middle land region 7A is equal to the width w7 of the outboard middle land region 7B. Thereby, the middle land regions 7A and 7B can be prevented from uneven wear.

The width w4 in the tire axial direction of the inboard shoulder land region 8A is set in a range from 0.2 to 0.25 times the tread width TW. The width w8 in the tire axial direction of the outboard shoulder land region 8B is set in a range from 0.2 to 0.25 times the tread width TW.
Preferably, the width W8 of the outboard shoulder land region 8B is more than the width W4 of the inboard shoulder land region 8A. Such outboard shoulder land region 8B is helpful to improve the steering stability during cornering in particular.

The ratio w4/w3 of the width w4 in the tire axial direction of the inboard shoulder land region 8A to the width w3 in the tire axial direction of the inboard middle land region 7A is set in a range of from 1.3 to 1.4.

In general, when the groove width W1 of the inboard shoulder main groove is more than the groove width W2 of the outboard shoulder main groove, if the difference between the width of the inboard shoulder land region and the width of the inboard middle land region is large, then the narrower land region is liable to deform excessively, and the steering stability on dry road surface has a tendency to deteriorate. According to the present invention, on the premise that the tire is mounted on a vehicle's wheel with a negative camber angle, the width w4 of the inboard shoulder land region 8A is set to be larger than the width W3 of the inboard middle land region 7A to satisfy the above-mentioned range for the ratio W4/W3. Thereby, it is possible to distribute the ground pressure evenly between the inboard shoulder land region and the inboard middle land region.
Accordingly, owing to the ground pressure evenly applied to the inboard middle land region and the inboard shoulder land region, and in cooperation with the above-mentioned structures of the inboard shoulder main groove, the steering stability on dry road surface and the wet performance can be improved in a well balanced manner.

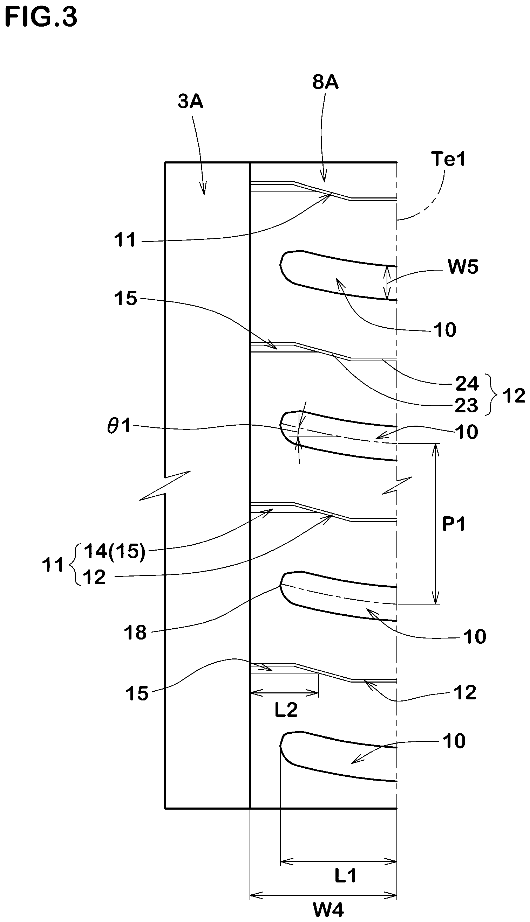

As shown in Fig. 3 which is a closeup of the inboard shoulder land region 8A shown in Fig. 1, the inboard shoulder land region 8A is provided with a plurality of shoulder lateral grooves 10 arranged circumferentially of the tire at intervals. Each shoulder lateral groove 10 extends from the inboard tread edge Te1 toward the axially inside to terminate within the inboard shoulder land region 8A.

If the groove width W1 of the inboard shoulder main groove 3A is larger than the groove width W2 of the outboard shoulder main groove 3B, the rigidity of the inboard shoulder land region 8A has a tendency to decrease.
According to the present invention, since the shoulder lateral grooves 10 constructed as above are provided, the decrease in the rigidity of the inboard shoulder land region 8A resulting from the increase in the width W1 of the inboard shoulder main groove 3A is suppressed, and good steering stability on dry road surface can be obtained.

The shoulder lateral groove 10 has a groove width W5 of from 5.0 to 8.0 mm in this example.
The length L1 in the tire axial direction of the shoulder lateral groove 10 is set in a range of from 0.65 to 0.90 times the width w4 in the tire axial direction of the inboard shoulder land region 8A in this example.
Such shoulder lateral grooves 10 can improve the steering stability on dry road surface and the wet performance in a well balanced manner.

The ratio W5/P1 of the groove width w5 of the shoulder lateral grooves 10 to the circumferential arrangement pitch P1 of the shoulder lateral grooves 10 is set in a range of not less than 0.18, preferably not less than 0.20, but not more than 0.25, preferably not more than 0.22.
Thereby, when the inboard shoulder main groove 3A, the inboard middle land region 7A and the inboard shoulder land region 8A constructed as above are given, the rigidity of the inboard shoulder land region 8A and the drainage of the shoulder lateral groove 10 are optimized.

If the ratio W5/P1 is less than 0.18, as the groove width W5 of the shoulder lateral groove 10 becomes small for the arrangement pitch P1, there is a possibility that the wet performance is deteriorated.
If the ratio W5/P1 is if more than 0.25, as the rigidity of the inboard shoulder land region 8A is decreased, there is a possibility that the steering stability on dry road surface is deteriorated.

As described above, in the pneumatic tire according to the present invention, the inboard land regions 7A and 8A and the grooves therein, which are subjected to a relatively higher ground pressure due to the negative camber, are specifically defined. Thereby, in the pneumatic tire 1 according to the present invention, the drainage of the inboard shoulder main groove 3A and the shoulder lateral grooves 10 and the rigidity of the inboard middle land region 7A and the inboard shoulder land region 8A are optimized in a comprehensive manner. Accordingly, the steering stability on dry road surface and the wet performance can be improved in a well balanced manner.

It is preferable that the angle θ1 of the shoulder lateral groove 10 with respect to the tire axial direction is gradually increased toward the axially inside. Such shoulder lateral groove 10 can effectively lead the water in the groove toward the tread edge Te when running in wet conditions.

It is preferable that the inboard shoulder land region 8A is provided with shoulder narrow grooves 11 connected to the inboard shoulder main groove 3A.
The groove width of the shoulder narrow groove 11 is less than that of the shoulder lateral groove 10.

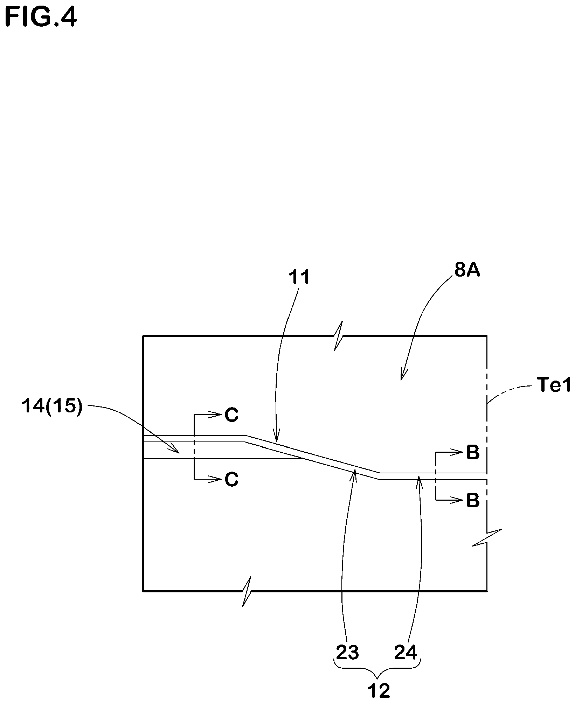

As shown in Fig. 4 which is a top view of the shoulder narrow groove 11, the shoulder narrow groove 11 comprises a sipe-like part 12 whose groove width is less than 2 mm, and a narrow groove part 14 whose groove width is not less than 2 mm in the tread of the inboard shoulder land region 8A.

The sipe-like part 12 in this example comprises a first part 23 inclined with respect to the tire axial direction, and
a second part 24 extending from the axially outer end of the first part 23 to the inboard tread edge Te1 in parallel with the tire axial direction.
Such sipe-like part 12 reduces deformation of the tread of the inboard shoulder land region 8A, and helps to prevent uneven wear of the inboard shoulder land region 8A.

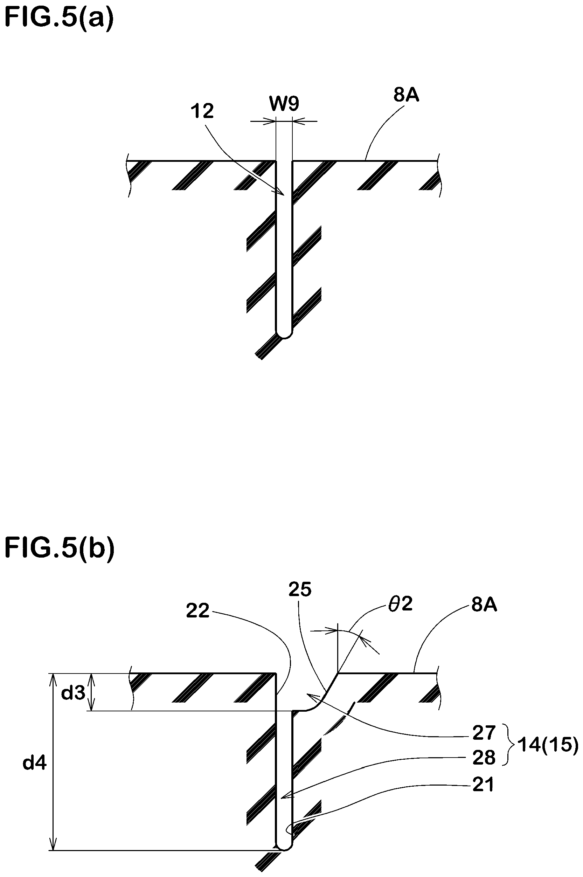

As shown in Fig. 5(a) which is a cross sectional view of the sipe-like part 12 taken along B-B line of Fig. 4, the sipe-like part 12 has a curved or semicircular bottom, and has a constant width W9 from its open top to the bottom.

In order to improve the steering stability on dry road surface and the wet performance in a well balanced manner, the width W9 of the sipe-like part 12 is preferably set in a range of not more than 1.8 mm, more preferably not more than 1.5 mm, but preferably not less than 0.3 mm, more preferably not less than 0.5 mm.

As shown in Fig. 4, the narrow groove part 14 of the shoulder narrow groove 11 in this example comprises an inboard narrow groove part 15 forming the axially inner end of the shoulder narrow groove 11.
The inboard narrow groove part 15 in this example extends in parallel with the tire axial direction.

It is preferable that, as shown in Fig. 3, the inboard narrow groove part 15 extends to a position axially outside the axially inner end 18 of the shoulder lateral groove 10. Thereby, during running in wet conditions, a water film between the inboard shoulder land region 8A and the road surface is led to at least either one of the shoulder lateral groove 10 and the inboard narrow groove part 15, therefore, the occurrence of aquaplaning phenomenon can be effectively suppressed.

The length L2 in the tire axial direction of the inboard narrow groove part 15 is preferably set in a range of not less than 0.40 times, more preferably not less than 0.45 times, but preferably not more than 0.55 times, more preferably not more than 0.50 times the width W4 in the tire axial direction of the inboard shoulder land region 8A.
Such inboard narrow groove part 15 suppresses uneven wear in an axially inner side of the inboard shoulder land region 8A, and helps to improve the wet performance.

The narrow groove part 14 has a first groove side wall 21 on one side, and a second groove side wall 22 on the other side in the tire circumferential direction.
As shown in Fig. 5 (b) which is a cross sectional view of the narrow groove part 14 taken along line C-C of Fig. 4, the second groove side wall 22 extends in parallel with the tire radial direction. The first groove side wall 21 comprises a gentle slope part 25 inclined largely in comparison with the second groove side wall 22.
Thereby, the narrow groove part 14 has a tapered part 27 whose groove width gradually decreases towards the radially inside, and an inner part 28 extending from the tapered part 27 toward the radially inside while maintaining the same groove width as the sipe-like part 12.

The angle θ2 of the gentle slope part 25 with respect to the tire radial direction is preferably set in a range of not less than 20 degrees, more preferably not less than 25 degrees, but preferably not more than 40 degrees, more preferably not more than 45 degrees.
Such gentle slope part 25 exerts good drainage, while preventing uneven wear in the vicinity of the tapered part 27.

In this embodiment, the gentle slope part 25 is continued to one of the groove side walls in the inner part 28 through a smoothly curved part.
The gentle slope part 25 is not limited to this configuration. The gentle slope part 25 may be a flat part extending from the tread of the inboard shoulder land region 8A to one of the groove side walls in the inner part 28.

Further, the gentle slope part 25 may be formed in each of the groove side walls of the narrow groove part 14. Thereby, the width of the opening of the tapered part 27 is increased, and it is possible to obtain good wet performance.

The ratio d3/d4 of the depth d3 of the tapered part 27 to the depth d4 of the narrow groove part 14 is preferably set in a range of not less than 0.15, more preferably not less than 0.20, but preferably not more than 0.35, more preferably not more than 0.30.
Such tapered part 27 improves the steering stability on dry road surface and the wet performance in a well balanced manner.

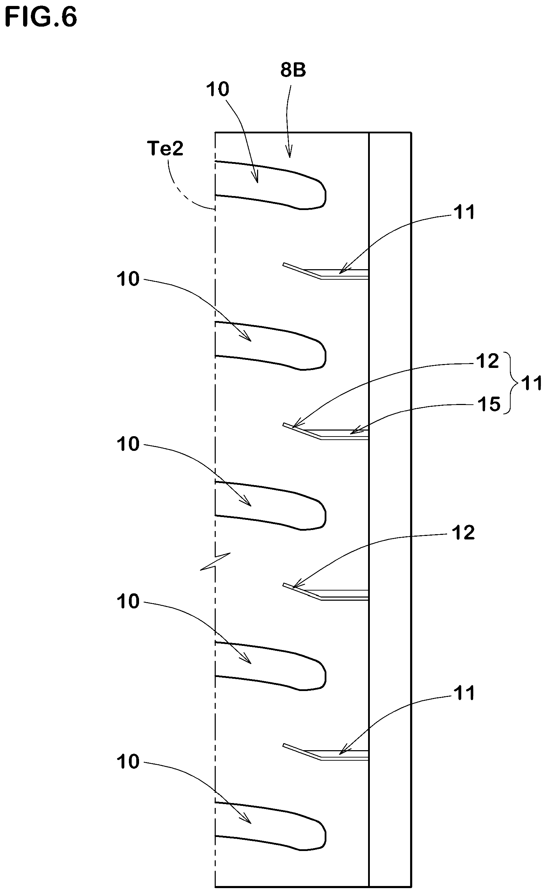

As shown in Fig. 6 which is a partial top view of the outboard shoulder land region 8B, the outboard shoulder land region 8B is provided with shoulder lateral grooves 10 and shoulder narrow grooves 11 similarly to the inboard shoulder land region 8A shown in Fig. 3.

The shoulder narrow groove 11 in the outboard shoulder land region 8B comprises a sipe-like part 12 extending axially outwardly from the inboard narrow groove part 15 and terminated within the outboard shoulder land region 8B.
Thereby, the rigidity of the outboard shoulder land region 8B is maintained, and the steering stability on dry road surface is improved.

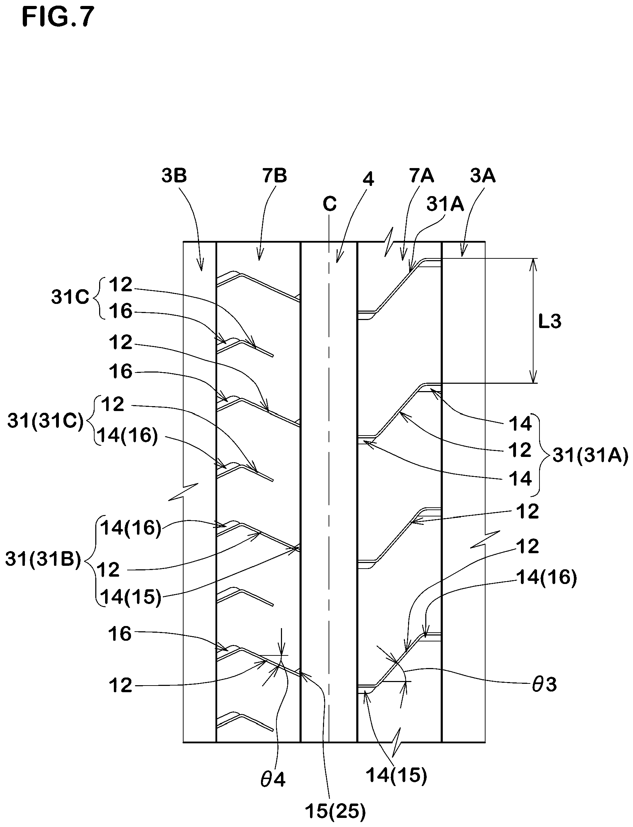

As shown in Fig. 7 which shows partial top views of the inboard middle land region 7A and the outboard middle land region 7B, each middle land region 7A, 7B is provided with a plurality of middle narrow grooves 31.
Each middle land region 7A, 7B is not circumferentially divided by lateral grooves having a groove width of more than that of the middle narrow grooves 31 so that the region 7A, 7B is formed as a circumferentially continuously extending rib in substance.

The middle narrow groove 31 comprises a sipe-like part 12 whose groove width is less than 2 mm at the groove top, and a narrow groove part 14 whose groove width is not less than 2 mm at the groove top.
In this embodiment, the sipe-the like part 12 and the narrow groove part 14 of the middle narrow groove 31 have the same cross-sectional shapes as the above-described cross-sectional shapes (shown in Figs.5(a) and 5(b)) of the sipe-the like part 12 and the narrow groove part 14 of the shoulder narrow groove 11.

The middle narrow grooves 31 include first middle narrow grooves 31A disposed in the inboard middle land region 7A, and second middle narrow grooves 31B and third middle narrow grooves 31C disposed in the outboard middle land region 7B.

Each first middle narrow groove 31A in the inboard middle land region 7A has an axially outer end connected to the inboard shoulder main groove 3A, and an axially inner end connected to the center main groove 4.

The sipe-like part 12 of the first middle narrow groove 31A is inclined with respect to the tire axial direction. Preferably, the sipe-like part 12 of the first middle narrow groove 31A is inclined with respect to the tire axial direction to the opposite direction to the first part 23 of the shoulder narrow groove 11 disposed in the inboard shoulder land region 8A. Such sipe-like part 12 of the first middle narrow groove 31A helps to decrease conicity.

The angle θ3 of the sipe-like part 12 of the first middle narrow groove 31A is preferably not less than 40 degrees, more preferably not less than 45 degrees, but preferably not more than 55 degrees, more preferably not more than 50 degrees with respect to the tire axial direction.
Such sipe-like part 12 of the first middle narrow groove 31A exerts its edge effect in the tire circumferential direction and the tire axial direction.

The first middle narrow groove 31A comprises
an inboard narrow groove part 15 forming the inner end of the first middle narrow groove 31A, and
an outboard narrow groove part 16 forming the outer end of the first middle narrow groove 31A.
Such inboard narrow groove part 15 and the outboard narrow groove part 16 supplement the drainage of the main groove and help to prevent the aquaplaning phenomenon.

The inboard narrow groove part 15 of the first middle narrow groove 31A is inclined with respect to the tire circumferential direction at an angle different from that of the sipe-like part 12.
The outboard narrow groove part 16 of the first middle narrow groove 31A is inclined with respect to the tire circumferential direction at an angle different from that of the sipe-like part 12.
In this embodiment, the inboard narrow groove part 15 and the outboard narrow groove part 16 are parallel with the tire axial direction.
Thereby, during running in wet conditions, water in the narrow groove part is effectively led toward the main groove.

The inboard narrow groove part 15 and the outboard narrow groove part 16 of the first middle narrow groove 31A are disposed in circumferentially different positions.

The sipe-like part 12 extends obliquely with respect to the tire axial direction from the inboard narrow groove part 15 to the outboard narrow groove part 16.

One of the groove side walls of the first middle narrow groove 31A is provided with a gentle slope part 25 (shown in Fig. 5(b)) in each of the inboard narrow groove part 15 and the outboard narrow groove part 16.
Thereby, axially inner side and outer side of the inboard middle land region 7A are uniformly worn, and the wear resistance is increased.

It is preferable that, as shown in Fig. 1, the outboard narrow groove part 16 of the first middle narrow groove 31A is overlapped in the tire circumferential direction with the circumferential extent 33 of the inboard narrow groove part 15 of the shoulder narrow groove 11.
Thereby, the inboard middle land region 7A and the inboard shoulder land region 8A are deformed in the same way, and the steering stability is improved.

In the outboard middle land region 7B, as shown in Fig. 7, the second middle narrow grooves 31B and the third middle narrow grooves 31C are alternately arranged in the tire circumferential direction.

The second middle narrow groove 31B has an axially outer end connected to the outboard shoulder main groove 3B, and an axially inner end connected to the center main groove 4. The third middle narrow groove 31C has an axially outer end connected to the outboard shoulder main groove 3B, and an axially inner end terminated within the outboard middle land region 7B.

Similarly to the shoulder narrow groove 11, each of the second middle narrow groove 31B and the third middle narrow groove 31C is provided with a sipe-like part 12 and a narrow groove part 14 having the above-described cross-sectional shapes.

The sipe-like part 12 of the second middle narrow groove 31B extends obliquely with respect to the tire axial direction. In this embodiment, the sipe-like part 12 of the second middle narrow groove 31B is inclined to the opposite direction to the sipe-like part 12 of the first middle narrow groove 31A.

Preferably, the angle θ4 with respect to the tire axial direction of the sipe-like part 12 of the second middle narrow groove 31B is less than the angle θ3 with respect to the tire axial direction of the sipe-like part 12 of the first middle narrow groove 31A.
Thereby, the rigidity in the tire axial direction of the outboard middle land region 7B becomes more than that of the inboard middle land region 7A, and the steering stability, especially when making a quick turning, is improved.

The narrow groove part 14 of the second middle narrow groove 31B comprises
an outboard narrow groove part 16 forming the outer end of the second middle narrow groove 31B, and
an inboard narrow groove part 15 forming the inner end of the second middle narrow groove 31B.

The outboard narrow groove part 16 of the second middle narrow groove 31B is inclined with respect to the tire axial direction to the opposite direction to the sipe-like part 12 of the second middle narrow groove 31B.
Thereby, when the opposite groove side walls of the second middle narrow groove 31B contact with each other, the groove side walls are engaged with each other, and deformation in the tire axial direction of the outboard middle land region 7B is prevented. Accordingly, the steering stability on dry road surface is improved.

The inboard narrow groove part 15 of the second middle narrow groove 31B comprises a gentle slope part 25 of a triangular shape formed by cutting out a corner formed between the side face of the outboard middle land region 7B and the groove side wall of the second middle narrow groove 31B. Such inboard narrow groove part 15 of the second middle narrow groove 31B helps to reduce uneven wear in an axially inner side of the outboard middle land region 7B.

The third middle narrow groove 31C comprises a sipe-like part 12, and an outboard narrow groove part 16 forming the outer end of the third middle narrow groove 31C.

The sipe-like part 12 of the third middle narrow groove 31C is inclined with respect to the tire axial direction to the same direction as the sipe-like part 12 of the second middle narrow groove 31B.
Preferably, the sipe-like part 12 of the third middle narrow groove 31C extends in parallel with the sipe-like part 12 of the second middle narrow groove 31B.

The sipe-like part 12 of the third middle narrow groove 31C is terminated within the outboard middle land region 7B. Thereby, the rigidity of the outboard middle land region 7B is maintained, and the steering stability on dry road surface is improved.

The outboard narrow groove part 16 of the third middle narrow groove 31C is inclined with respect to the tire axial direction to the opposite direction to the sipe-like part 12. Preferably, the outboard narrow groove part 16 of the third middle narrow groove 31C extends in parallel with the outboard narrow groove part 16 of the second middle narrow groove 31B. Thereby, the rigidity in an axially outer side of the outboard middle land region 7B becomes even, and uneven wear of the outboard middle land region 7B is prevented.

It is preferable that, as shown in Fig. 1, the outboard narrow groove part 16 of the third middle narrow groove 31C is overlapped in the tire circumferential direction with the circumferential extent 34 of the inboard narrow groove part 15 of the shoulder narrow groove 11 in the outboard shoulder land region 8B.
Thereby, the outboard middle land region 7B and the outboard shoulder land region 8B are deformed in the same way, and the steering stability is improved.

while detailed description has been made of a specific embodiment of the present invention, the specific embodiment should not be construed as to limit the scope of the present invention; the present invention may be embodied in various forms.

### working examples

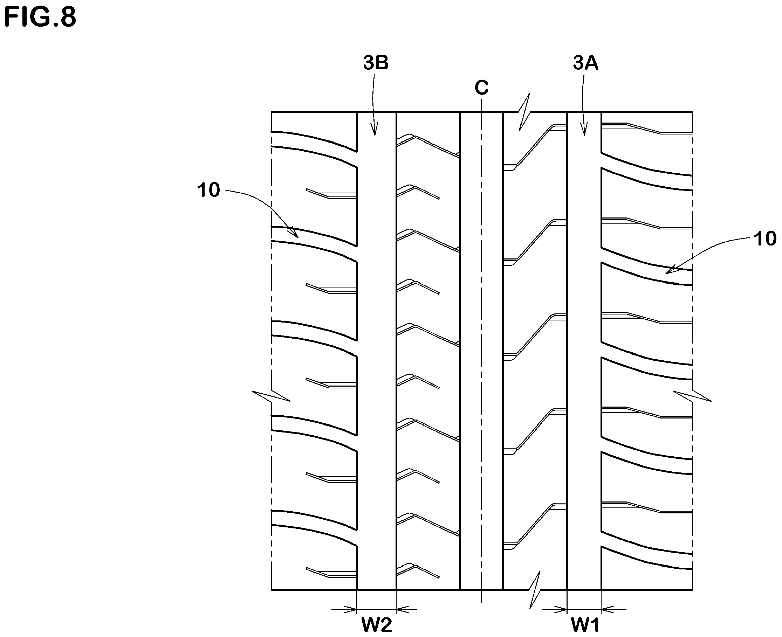

Based on the tread pattern shown in Fig. 1, pneumatic tires of size 165/70R14 having specifications listed in Table 1 were experimentally manufactured. Further, a pneumatic tire as comparative example 1 was experimentally manufactured, wherein, as shown in Fig. 8, the groove width W1 of the inboard shoulder main groove 3A was less than the groove width W2 of the outboard shoulder main groove 3B, and the shoulder lateral grooves 10 were connected to the shoulder main grooves. The test tires were tested for the steering stability on dry road surface and the wet performance. Specifications Common to all of the test tires and test methods are as follows:
wheel rim: 14x5J
Tire pressure: 230 kPa

### < Steering stability on dry road surface >

The steering stability when driving the following test car on an asphalt road surface of a circuit course, was evaluated by the driver's feelings.
The results are indicated by an index based on Comparative example 1 being 100, wherein the larger the index number, the better the steering stability.
Test car: 1000 cc displacement, front-wheel-drive
Test tire mounting positions: all wheels

### < Wet performance >

The test car was run along a 100 meter radius circle on an asphalt road partially provided with a 5 mm depth 20 m long water pool, and the lateral acceleration (lateral G) during running in the water pool was measured at the front wheels, gradually increasing the speed entering into the water pool, to obtain the average for the speed range of from 50 to 80 km/h. The results are indicated by an index based on comparative example 1 being 100, wherein the larger the index number, the better the wet performance.

The test results are shown in Table 1.

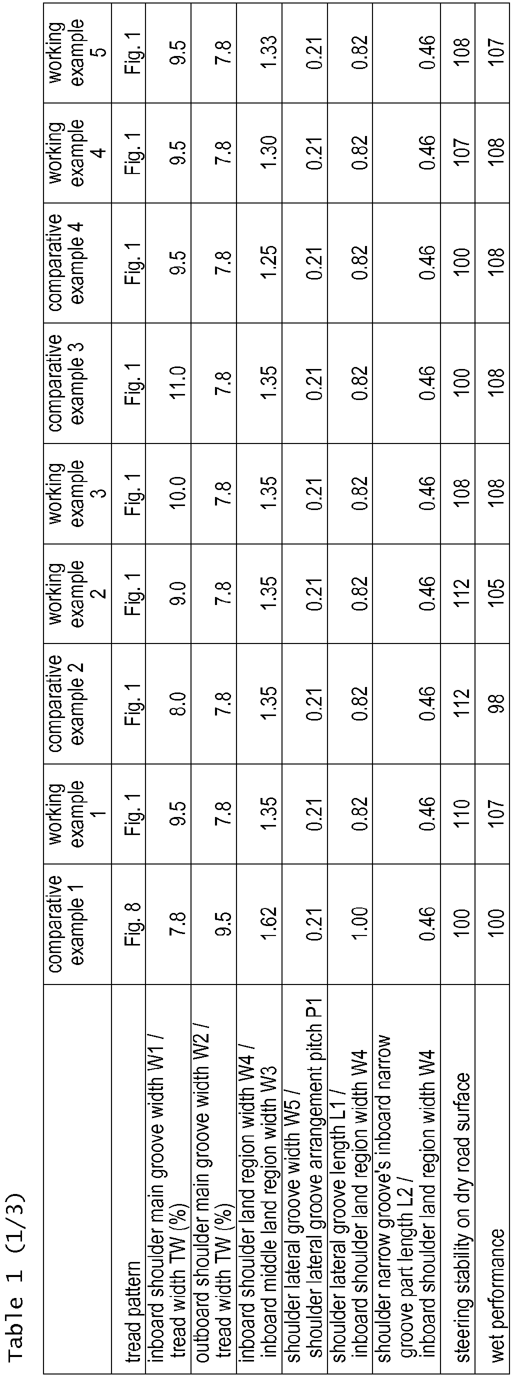

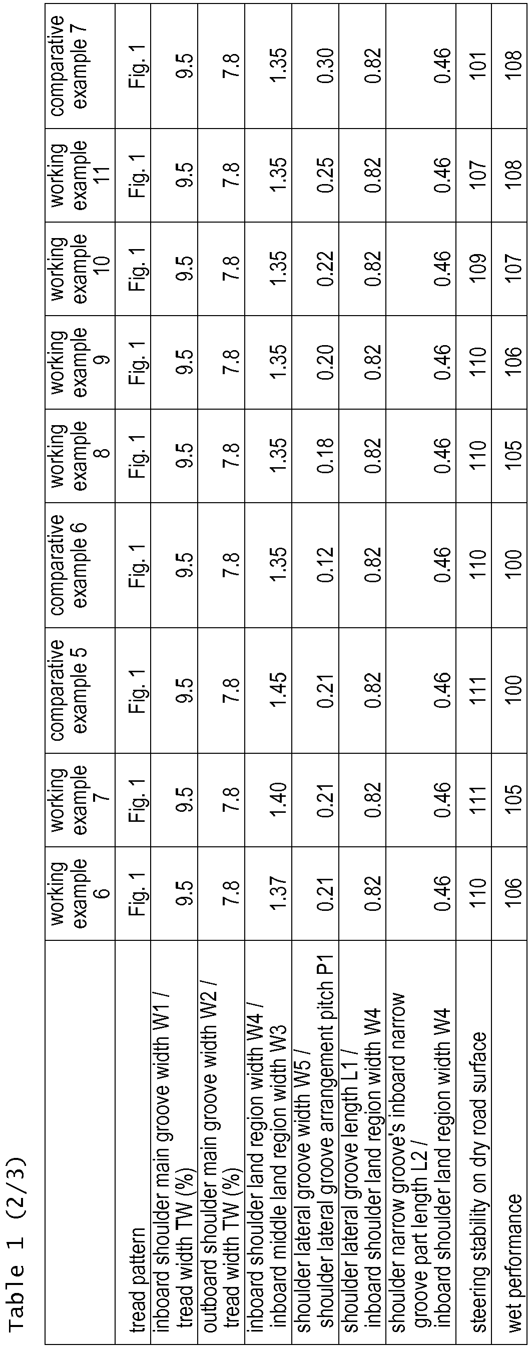

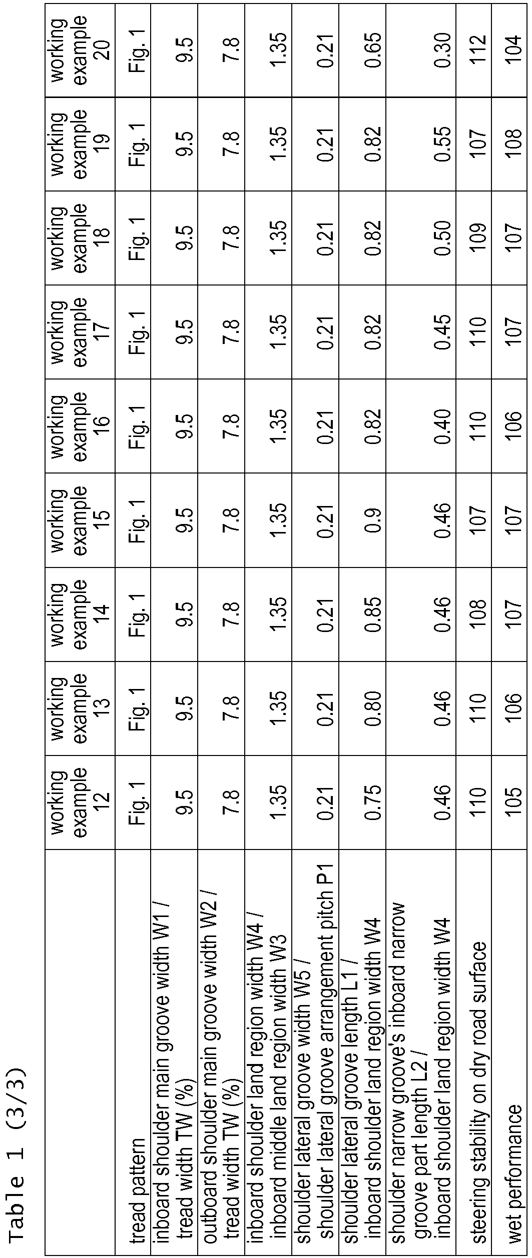

From the test results, it was confirmed that the pneumatic tires according to the present invention can be improved in the steering stability on dry road surface and the wet performance in a well balanced manner.

### Reference Signs List

- 2: tread portion
- 3A: inboard shoulder main groove
- 3B: outboard shoulder main groove
- 4: center main groove
- 7A: inboard middle land region
- 8A: inboard shoulder land region
- 10: shoulder lateral groove
- Te1: inboard tread edge
- Te2: outboard tread edge
- W1: inboard shoulder main groove's width
- W2: outboard shoulder main groove's width
- W3: inboard middle land region's axial width
- W4: inboard shoulder land region's axial width
- W5: shoulder lateral grooves' width
- P1: shoulder lateral grooves' circumferential arrangement pitch

## Claims

1. A pneumatic tire (1) comprising:
a tread portion (2) having an inboard tread edge (Tel) to be positioned towards the center of a vehicle body, and an outboard tread edge (Te2) to be positioned away from the center of the vehicle body,
the tread portion (2) provided with
an inboard shoulder main groove (3A) disposed on the inboard tread edge (Tel) side and extending continuously in the tire circumferential direction,
an outboard shoulder main groove (3B) disposed on the outboard tread edge (Te2) side and extending continuously in the tire circumferential direction, and
a center main groove (4) disposed between the inboard shoulder main groove (3A) and the outboard shoulder main groove (3B) and extending continuously in the tire circumferential direction, so as to define
an inboard shoulder land region (8A) axially outside the inboard shoulder main groove (3A), and
an inboard middle land region (7A) between the inboard shoulder main groove (3A) and the center main groove (4),
a ratio W4/W3 of a width W4 in the tire axial direction of the inboard shoulder land region (8A) to a width W3 in the tire axial direction of the inboard middle land region (7A) is set in a range of from 1.3 to 1.4,
the inboard shoulder land region (8A) is provided with a plurality of shoulder lateral grooves (10) extending axially inwardly from the inboard tread edge (Te1) to terminate within the inboard shoulder land region (8A), and arranged circumferentially of the tire, wherein
a groove width W1 of the inboard shoulder main groove (3A) is more than a groove width W2 of the outboard shoulder main groove (3B),
**characterized in that**
the groove width W1 of the inboard shoulder main groove (3A) is in a range of from 9.0 % to 10.0 % of the tread width (TW), and
a ratio W5/P1 of a groove width W5 of the shoulder lateral grooves (10) to an arrangement pitch P1 in the tire circumferential direction of the shoulder lateral grooves (10) is in a range of from 0.18 to 0.25.

2. The pneumatic tire according to claim 1, wherein
the inboard shoulder land region (8A) is provided with shoulder narrow grooves (11),
each shoulder narrow groove (11) comprising an inboard narrow groove part (15) extending axially outwardly from the inboard shoulder main groove (3A) and having a groove width of not less than 2 mm in the tread of the inboard shoulder land region (8A), and
a sipe-like part (12) having a groove width of less than 2 mm in the tread of the inboard shoulder land region (8A).

3. The pneumatic tire according to claim 2, wherein
the inboard narrow groove part (15) extends to a position axially outside the axially inner end of the shoulder lateral groove (10).

4. The pneumatic tire according to claim 2 or 3, wherein
the sipe-like part (12) comprises a first part (23) extending from the inboard narrow groove part (15) while inclining with respect to the tire axial direction, and a second part (24) extending from the first part (23) to the inboard tread edge (Te1) in parallel with the tire axial direction.

5. The pneumatic tire according to any one of claims 2-4, wherein
the inboard middle land region (7A) is provided with middle narrow grooves (31A) extending from the inboard shoulder main groove (3A) to the center main groove (4), and
an axially outer end part (16) of each middle narrow groove (31A) is overlapped in the tire circumferential direction with the circumferential extent (33) of one of the inboard narrow groove parts (15).

6. The pneumatic tire according to claim 4, wherein
the inboard middle land region (7A) is provided with middle narrow grooves (31A) extending from the inboard shoulder main groove (3A) to the center main groove (4),
the middle narrow groove (31A) comprises a sipe-like part (12) having a groove width of less than 2 mm in the tread of the inboard middle land region (7A), and
the sipe-like part (12) of the middle narrow groove (31A) is inclined with respect to the tire axial direction to the opposite direction to the first part (23).

## Patentansprüche

1. Luftreifen (1), umfassend:
einen Laufflächenabschnitt (2), der eine innenliegende Laufflächenkante (Tel) zur Positionierung in Richtung der Mitte einer Fahrzeugkarosserie und eine außenliegende Laufflächenkante (Te2) zur Positionierung von der Mitte der Fahrzeugkarosserie weg aufweist,
wobei der Laufflächenabschnitt (2) versehen ist mit einer innenliegenden Schulterhauptrille (3A), die auf der Seite der innenliegenden Laufflächenkante (Tel) angeordnet ist und sich durchgehend in der Reifenumfangsrichtung erstreckt,
einer außenliegenden Schulterhauptrille (3B), die auf der Seite der außenliegenden Laufflächenkante (Te2) angeordnet ist und sich durchgehend in der Reifenumfangsrichtung erstreckt, und
einer zentralen Hauptrille (4), die zwischen der innenliegenden Schulterhauptrille (3A) und der außenliegenden Schulterhauptrille (3B) angeordnet ist und sich durchgehend in der Reifenumfangsrichtung erstreckt, um so zu definieren
einen innenliegenden Schulterlandbereich (8A) axial außerhalb der innenliegenden Schulterhauptrille (3A), und
einen innenliegenden mittleren Landbereich (7A) zwischen der innenliegenden Schulterhauptrille (3A) und der zentralen Hauptrille (4),
wobei ein Verhältnis W4/W3 einer Breite W4 in der Reifenaxialrichtung des innenliegenden Schulterlandbereichs (8A) zu einer Breite W3 in der Reifenaxialrichtung des innenliegenden mittleren Landbereichs (7A) in einem Bereich von 1,3 bis 1,4 festgelegt ist,
der innenliegende Schulterlandbereich (8A) mit einer Vielzahl von Schulterquerrillen (10) versehen ist, die sich von der innenliegenden Laufflächenkante (Tel) axial nach innen erstrecken, so dass sie innerhalb des innenliegenden Schulterlandbereichs (8A) enden, und um den Umfang des Reifens herum angeordnet sind,
wobei eine Rillenbreite W1 der innenliegenden Schulterhauptrille (3A) größer als eine Rillenbreite W2 der außenliegenden Schulterhauptrille (3B) ist,
**dadurch gekennzeichnet, dass**
die Rillenbreite W1 der innenliegenden Schulterhauptrille (3A) in einem Bereich von 9,0 % bis 10,0 % der Laufflächenbreite (TW) liegt, und
ein Verhältnis W5/P1 einer Rillenbreite W5 der Schulterquerrillen (10) zu einem Anordnungsteilungsabstand P1 in der Reifenumfangsrichtung der Schulterquerrillen (10) in einem Bereich von 0,18 bis 0,25 liegt.

2. Luftreifen nach Anspruch 1, wobei
der innenliegende Schulterlandbereich (8A) mit schmalen Schulterrillen (11) versehen ist,
wobei jede schmale Schulterrille (11) umfasst einen innenliegenden schmalen Rillenteil (15), der sich von der innenliegenden Schulterhauptrille (3A) axial nach außen erstreckt und eine Rillenbreite von nicht weniger als 2 mm in der Lauffläche des innenliegenden Schulterlandbereichs (8A) aufweist, und
einen feinschnittartigen Teil (12) mit einer Rillenbreite von weniger als 2 mm in der Lauffläche des innenliegenden Schulterlandbereichs (8A).

3. Luftreifen nach Anspruch 2, wobei
der innenliegende schmale Rillenteil (15) sich zu einer Position axial außerhalb des axial inneren Endes der Schulterquerrille (10) erstreckt.

4. Luftreifen nach Anspruch 2 oder 3, wobei der feinschnittartige Teil (12) einen ersten Teil (23), der sich von dem innenliegenden schmalen Rillenteil (15) erstreckt, während er sich in Bezug auf die Reifenaxialrichtung neigt, und einen zweiten Teil (24) umfasst, der sich von dem ersten Teil (23) zu der innenliegenden Laufflächenkante (Tel) parallel zu der Reifenaxialrichtung erstreckt.

5. Luftreifen nach einem der Ansprüche 2-4, wobei
der innenliegende mittlere Landbereich (7A) mit mittleren schmalen Rillen (31A) versehen ist, die sich von der innenliegenden Schulterhauptrille (3A) zu der zentralen Hauptrille (4) erstrecken, und
ein axial äußerer Endteil (16) jeder mittleren schmalen Rille (31A) in der Reifenumfangsrichtung die Umfangsausdehnung (33) von einem der innenliegenden schmalen Rillenteile (15) überlappt.

6. Luftreifen nach Anspruch 4, wobei
der innenliegende mittlere Landbereich (7A) mit mittleren schmalen Rillen (31A) versehen ist, die sich von der innenliegenden Schulterhauptrille (3A) zu der zentralen Hauptrille (4) erstrecken,
die mittlere schmale Rille (31A) einen feinschnittartigen Teil (12) mit einer Rillenbreite von weniger als 2 mm in der Lauffläche des innenliegenden mittleren Landbereichs (7A) umfasst, und
der feinschnittartige Teil (12) der mittleren schmalen Rille (31A) in Bezug auf die Reifenaxialrichtung in die entgegengesetzte Richtung wie der erste Teil (23) geneigt ist.

## Revendications

1. Bandage pneumatique (1) comprenant :
une portion formant bande de roulement (2) ayant une bordure de roulement intérieure (Tel) destinée à être positionnée vers le centre d'un corps de véhicule, et une bordure de roulement extérieure (Te2) destinée à être positionnée en éloignement du centre du corps de véhicule,
la portion formant bande de roulement (2) étant dotée :
d'une rainure principale d'épaulement côté intérieur (3A) disposée sur le côté de la bordure de roulement intérieure (Tel) et s'étendant en continu dans la direction circonférentielle du pneumatique,
d'une rainure principale d'épaulement côté extérieur (3B) disposée sur le côté de la bordure de roulement extérieure (Te2) et s'étendant en continu dans la direction circonférentielle du pneumatique, et
d'une rainure principale centrale (4) disposée entre la rainure principale d'épaulement intérieur (3A) et la rainure principale d'épaulement extérieur (3B) et s'étendant en continu dans la direction circonférentielle du pneumatique, de manière à définir :
une région en relief d'épaulement côté intérieur (8A) axialement à l'extérieur de la rainure principale d'épaulement côté intérieur (3A), et
une région en relief médiane côté intérieur (7A) entre la rainure principale d'épaulement côté intérieur (3A) et la rainure principale centrale (4),
un rapport W4/W3 d'une largeur W4 dans la direction axiale du pneumatique de la région en relief d'épaulement côté intérieur (8A) sur une largeur W3 dans la direction axiale du pneumatique de la région en relief médiane côté intérieur (7A) est fixé dans une plage de 1,3 à 1,4,
la région en relief d'épaulement côté intérieur (8A) est dotée d'une pluralité de rainures latérales d'épaulement (10) qui s'étendent axialement vers l'intérieur depuis la bordure de roulement intérieure (Tel) pour se terminer à l'intérieur de la région en relief d'épaulement côté intérieur (8A), et agencées circonférentiellement du pneumatique,
dans lequel
une largeur de rainure W1 de la rainure principale d'épaulement côté intérieur (3A) est supérieure à une largeur de rainure W2 de la rainure principale d'épaulement côté extérieur (3B),
**caractérisé en ce que**
la largeur de rainure W1 de la rainure principale d'épaulement côté intérieur (3A) est dans une plage de 9,0 % à 10,0 % de la largeur de roulement (TW), et
un rapport W5/P1 d'une largeur de rainure W5 des rainures latérales d'épaulement (10) sur un pas d'agencement P1 dans la direction circonférentielle du pneumatique des rainures latérales d'épaulement (10) est dans une plage de 0,18 à 0,25.

2. Bandage pneumatique selon la revendication 1, dans lequel
la région en relief d'épaulement côté intérieur (8A) est dotée de rainures étroites d'épaulement (11),
chaque rainure étroite d'épaulement (11) comprenant une partie de rainure étroite côté intérieur (15) s'étendant axialement vers l'extérieur depuis la rainure principale d'épaulement côté intérieur (3A) et ayant une largeur de rainure qui n'est pas inférieure à 2 mm dans la bande de roulement de la région en relief d'épaulement côté intérieur (8A), et
une partie semblable à une fente (12) ayant une largeur de rainure inférieure à 2 mm dans la bande de roulement de la région en relief d'épaulement côté intérieur (8A).

3. Bandage pneumatique selon la revendication 2, dans lequel
la partie de rainure étroite côté intérieur (15) s'étend jusqu'à une position axialement à l'extérieur de l'extrémité axialement intérieure de la rainure latérale d'épaulement (10).

4. Bandage pneumatique selon la revendication 2 ou 3, dans lequel
la partie semblable à une fente (12) comprend une première partie (23) s'étendant depuis la partie de rainure étroite côté intérieur (15) tout en étant inclinée par rapport à la direction axiale du pneumatique, et une seconde partie (24) s'étendant depuis la première partie (23) vers la bordure de roulement intérieur (Tel) en parallèle à la direction axiale du pneumatique.

5. Bandage pneumatique selon l'une quelconque des revendications 2 à 4, dans lequel
la région en relief médiane intérieure (7A) est dotée de rainures étroites médianes (31A) s'étendant depuis la rainure principale d'épaulement côté intérieur (3A) vers la rainure principale centrale (4), et
une partie d'extrémité axialement extérieure (16) de chaque rainure étroite médiane (31A) est en chevauchement, dans la direction circonférentielle du pneumatique, avec l'extension circonférentielle (33) de l'une des parties de rainure étroite côté intérieur (15).

6. Bandage pneumatique selon la revendication 4, dans lequel
la région en relief médiane côté intérieur (7A) est dotée de rainures étroites médianes (31A) s'étendant depuis la rainure principale d'épaulement côté intérieur (3A) vers la rainure principale centrale (4),
la rainure étroite médiane (31A) comprend une partie semblable à une fente (12) ayant une largeur inférieure à 2 mm dans la bande de roulement de la région en relief médiane côté intérieur (7A), et
la partie semblable à une fente (12) de la rainure étroite médiane (31A) est inclinée par rapport à la direction axiale du pneumatique vers la direction opposée à la première partie (23).
